# EUROPEAN PATENT APPLICATION

(11) **EP 2 533 534 A2**
(43) Date of publication of application: **12.12.2012**
(21) Application number: 10844798.8
(22) Date of filing: 11.10.2010
(51) Int. Cl.: H04N 7/18, H04N 5/225

(54) **TRACKING AND MONITORING CAMERA DEVICE AND REMOTE MONITORING SYSTEM USING SAME**

(30) Priority: 01.02.2010 KR 20100009028
(71) Applicant: Youngkook Electronics Co. Ltd., Seoul 137-070 (KR)
(72) Inventor: KIM, Bae Hoon, Seoul 137-900 (KR); LEE, Jee hwan, Gyonggi-do 423-012 (KR)
(74) Representative: Moore, Graeme Patrick
(86) International application number: PCT/KR2010/006942
(87) International publication number: WO 2011/093574

(57) **Abstract**

The present invention to provide a camera apparatus including a wide area monitoring camera and an intensive monitoring camera as one body, in which the camera apparatus can smoothly monitor an overall situation of a wide area and intensively monitor and trace a specific area or a target object, and a shadow area is not generated in an area directly below the camera apparatus. The camera apparatus of the present invention includes a main frame, a first camera unit and a second camera unit. The main frame has a lens installation surface where a normal line is directed to the lower outside. The first camera unit is installed in the main frame, has a wide angle lens disposed on the lens installation surface so as to direct an optical axis to lower outside and a first image sensor for converting light entering through the wide angle lens into an electrical signal, and photographs images of neighboring areas including an area directly below the camera apparatus. The second camera unit has a second image sensor and is installed so as to rotate horizontally and vertically with respect to the main frame. Preferably, the main frame includes a supporting protrusion projecting toward outside from an outer surface and having a front surface directed to the lower outside, and the wide angle lens can be attached on the front surface of the supporting protrusion.

## Description

### Field of the Invention

The present invention relates to a television camera apparatus, more particularly to a multi-functional monitoring camera apparatus provided with a plurality of cameras. In addition, the present invention relates to a remote monitoring system employing such a camera apparatus.

### Background of the Related Art

Security and monitoring systems using monitoring camera apparatuses are widely used for entrance management or security purposes. Installation of such security and monitoring systems continues to grow even on general roads or in residential areas, as well as in banks, military facilities and other public facilities or business buildings where security is required.

Although various kinds of monitoring camera apparatuses are used, one of the most widely used camera apparatuses at the moment when the present application is prepared is a speed dome camera apparatus of a Pan-Tilt-Zoom (hereinafter, referred to as PTZ) method capable of horizontal rotation (i.e., panning), vertical rotation (i.e., tilting) and zoom-in and zoom-out. According to the speed dome camera apparatus of the PTZ method, horizontal and vertical rotation and zoom-in/zoom-out can be remotely controlled, and thus an operator at a remote site may change a monitoring area or trace and intensively monitor a specific target as needed.

However, since lenses employed in the PTZ camera apparatus do not have a wide view angle, there may be a blind spot that the camera apparatus cannot observe depending on a monitoring direction set by the operator. Particularly, when the camera apparatus zooms in the lens and drives a panning and tilting mechanism to trace and monitor a specific target, the camera apparatus cannot monitor other than the neighboring areas of the traced target.

There are some fixed-type camera apparatuses which secure panoramic images by adopting a super-wide angle lens such as a fisheye lens in order to expand the monitoring scope. However, in the case of a camera apparatus using the fisheye lens, a photographed image is round-shaped, and thus distortion is severe overall, and particularly it is difficult to identify a thing at the edge of the image. Accordingly, a fisheye type camera can be used only for observing an overall situation and is seldom used in a speed dome camera apparatus for tracing and monitoring a target in combination with the PTZ mechanism.

It has been tried to monitor a wide area and trace and monitor a specific target in parallel by combining a camera for acquiring a panoramic image and a PTZ camera for intensively monitoring a specific target.

For example, according to the disclosure specified in Korean Laid-open Patent Gazette 2004-0031968 (title of the invention: intruder tracing apparatus and method using dual camera), a panoramic image of a room or a monitored area is acquired by a first camera using a fisheye lens, a convex mirror, or a combination of a convex mirror and a concave mirror, and if an intruder appears in the monitored area, the moving route of the intruder is automatically detected, and a second camera photographs images of the intruder while tracing the intruder.

However, the dual camera apparatus specified in the above-identified reference has a very complicated structure in contrast to the original intention of the inventors, and thus processing and assembling efforts cannot but increase. Furthermore, since the first camera is provided at the lower center of the dual camera apparatus, the first camera blocks the view of the second camera or hinders left and right or up and down movement of the second camera. Accordingly, if the intruder is positioned beneath the center of the dual camera, the second camera cannot properly photograph the intruder.

A monitoring system is specified in Korean Laid-open Patent Gazette 2005-0103597 (title of the invention: monitoring system using real-time panoramic video image and system control method thereof), in which a plurality of component cameras is installed on the outer surface of a supporting rod, and a PTZ camera is installed on the top of the supporting bar as one body. According to this monitoring system, a panoramic image is created by projecting and combining images photographed by the plurality of component cameras on a virtual cylinder surface, and an area selected by a user or an area where a moving object is sensed is photographed by the PTZ camera.

However, in the apparatus specified in the reference described above, since the plurality of component cameras and the PTZ camera are separately manufactured and installed on the supporting bar, the size of the camera apparatus increases, and furthermore, limitations caused by the installation space or method are increased. In addition, in such a system, the plurality of component cameras functions only as a sensor and almost cannot grasp continuous moving routes of a moving object from the images acquired by the component cameras.

### DETAILED DESCRIPTION OF THE INVENTION

### Technical Problem

The present invention has been made in view of the above problems, and it is an object of the present invention to provide a camera apparatus including a wide area monitoring camera and an intensive monitoring camera as one body, in which the camera apparatus can smoothly monitor an overall situation of a wide area and intensively monitor and trace a specific area or a target object, and a shadow area is not generated in an area directly below the camera apparatus.

In addition, another object of the present invention is to provide a monitoring system capable of smoothly monitoring an overall situation of a wide area and intensively monitoring and tracing a specific area or a target object by employing such a camera apparatus.

### Technical Solutions

To accomplish the above object, according to one aspect of the present invention, there is provided a camera apparatus including a main frame, a first camera unit and a second camera unit. The main frame has a lens installation surface where a normal line is directed to the lower outside. The first camera unit is installed in the main frame, has a wide angle lens disposed on the lens installation surface so as to direct an optical axis to the lower outside and a first image sensor for converting the light entering through the wide angle lens into an electrical signal, and photographs images of neighboring areas including an area directly below the camera apparatus. The second camera unit has a second image sensor and is installed so as to rotate horizontally and vertically with respect to the main frame.

In a preferred embodiment of the present invention, the main frame includes a supporting protrusion projecting toward outside from an outer surface and having a front surface directed to the lower outside. In the embodiment, the wide angle lens can be attached on the front surface of the supporting protrusion. The first camera unit may be provided in plurality to be horizontally symmetrical on the outer surface of the main frame.

Preferably, a depression for inserting and installing the supporting protrusion is provided on the outer surface of the main frame, and the supporting protrusion is detachably installed in the depression. In a preferred embodiment, a rotation boss is formed on either a side wall of the depression or a side surface of the supporting protrusion, and an insertion hole is provided on the other surface, and thus the direction of an optical axis of the first camera unit can be changed by tilting the supporting protrusion while the rotation boss is inserted in the insertion hole. In addition, a latch prominence is formed on either the side wall of the depression or the side surface of the supporting protrusion, and a plurality of latch holes is provided on the other surface, and thus the latching prominence can be engaged to one of the plurality of latch holes. However, in a modified embodiment, the supporting protrusion can be driven and rotate by a tilting motor.

In a preferred embodiment of the present invention, the second camera unit includes a zoom driving unit for adjusting a photographing size of a subject and a pan/tilt driving unit for adjusting a photographing direction. In addition, the camera apparatus additionally includes a movement detection unit for detecting a moving object from a wide angle image acquired by the first camera unit and a drive control unit for controlling the second camera unit to photograph the moving object by driving the pan/tilt driving unit of the second camera apparatus.

In a preferred embodiment of the present invention, the camera apparatus further includes a lookup table for storing mapping information of a panning angle and a tilting angle corresponding to each pixel contained in the wide angle image. In this case, the drive control unit may drive the pan/tilt driving unit referring to the lookup table depending on the position of the moving object in the wide angle image and drive the zoom driving unit depending on the size of the moving object.

Furthermore, the camera apparatus may additionally include an image combination unit for configuring an output image by combining the wide angle image and an intensive monitoring image acquired by the second camera unit. In addition, the camera apparatus may additionally include a distortion correction unit for correcting distortions in the wide angle image. In the embodiment, it is preferable that the movement detection unit detects the moving object from a distortion corrected wide angle image, and the image combination unit configures the output image by combining the distortion corrected wide angle image and the intensive monitoring image.

In a preferred embodiment of the present invention, a dome is provided at a lower portion of the main frame, and the second camera unit is installed inside the dome. However, in a modified embodiment, the camera apparatus further includes a horizontal rotation frame installed so as to rotate horizontally with respect to the main frame, and the second camera unit is installed so as to rotate vertically with respect to the horizontal rotation frame.

Meanwhile, according to another aspect of the present invention, there is provided a remote monitoring system including a monitoring camera apparatus and a remote monitoring apparatus electrically connected to the monitoring camera apparatus. Here, the camera apparatus includes a main frame, a first camera unit, a second camera unit, a control unit and an image combination unit. The main frame has a lens installation surface where a normal line is directed to the lower outside. The first camera unit is installed in the main frame, has a wide angle lens disposed on the lens installation surface so as to direct an optical axis to the lower outside, and photographs images of neighboring areas including an area directly below the camera apparatus. The second camera unit has a second image sensor and is installed so as to rotate horizontally and vertically with respect to the main frame. The control unit detects a moving object from a wide angle image acquired by the first camera unit and controls the second camera unit to photograph the moving object. The image combination unit configures an output image by combining the wide angle image and an intensive monitoring image acquired by the second camera unit and transmits the output image to the remote monitoring apparatus.

### Advantageous Effects

The camera apparatus according to the present invention includes a first camera unit, i.e., a wide area monitoring camera, and a second camera unit, i.e., an intensive monitoring camera, as one body, and accordingly, the camera apparatus can smoothly monitor an overall situation of a wide area and intensively monitor and trace a specific area or a target object. Since three steps of pattern monitoring including "entire area monitoring", "intensive monitoring", and "automatic trace" are sequentially and simultaneously performed, the apparatus and system of the present invention may perform an operation close to "monitoring based on intelligence and visual observation of a human being", and thus a perfect monitoring function can be implemented.

In addition, trace of a moving object is performed not by a remote control apparatus in a central motoring room, but by a camera apparatus, and thus although power of the central motoring room is cut off or an error occurs at the remote control apparatus or a communication line, tracing and monitoring can be continued without interruption.

Since the lens of a wide area monitoring camera is disposed on the outer surface of the housing to direct the optical axis of the lens toward the lower outside, a shadow area is not generated in a neighboring area including an area directly below the camera apparatus. At the same time, since the wide area monitoring camera and the intensive monitoring camera do not interfere with each other, a range of vision can be secured to the maximum.

Particularly, according to a preferred embodiment of the present invention, since the camera apparatus has a small volume and a compact form, manufacturing cost is low, and its appearance is not spoiled while being harmonized with the installation environment. In addition, the camera apparatus is not easily spotted by a potential intruder who tries to avoid or detour a monitoring system.

### BRIEF DESCRIPTION OF THE DRAWINGS

Hereinafter, the preferred embodiments of the present invention will be described in detail with reference to the accompanying drawings. For the sake of convenience, the same reference number will be used for the same element or the equivalent element thereof in the drawings.

FIG. 1 is a perspective view showing an embodiment of a camera apparatus according to the present invention;

FIG. 2 is a side view showing the camera apparatus of FIG. 1;

FIG. 3 is a partially exploded perspective view showing the camera apparatus of FIG. 1;

FIG. 4 is a view showing the process of changing the direction of a first camera unit in the camera apparatus of FIG. 1;

FIG. 5 is a block diagram showing an embodiment of the electrical/optical configuration of the camera apparatus of FIG. 1;

FIG. 6 is a view showing an example of a distortion correction process according to an inverse warping algorithm;

FIG. 7 is a view showing an example of the configuration of a panoramic image;

FIG. 8 is a view showing an example of an output image;

FIG. 9 is a block diagram showing an embodiment of a remote monitoring apparatus appropriate to be used in connection with the camera apparatus of FIG. 1;

FIG. 10 is a side view showing a modified embodiment of the camera apparatus of FIG. 1;

FIG. 11 is a block diagram showing the electrical/optical configuration of the camera apparatus of FIG. 10;

FIG. 12 is a view showing the process of configuring a panoramic image by the camera apparatus of FIG. 11;

FIG. 13 is a side view showing another modified embodiment of the camera apparatus of FIG. 1;

FIG. 14 is a side view showing still another modified embodiment of the camera apparatus of FIG. 1;

FIG. 15 is a bottom view showing the camera apparatus of FIG. 14;

FIG. 16 is a bottom view showing still another modified embodiment of the camera apparatus of FIG. 1;

FIG. 17 is a perspective view showing another embodiment of the camera apparatus according to the present invention;

FIG. 18 is a partially exploded perspective view showing a connection relation of a main frame and a first camera unit in the camera apparatus of FIG. 17;

FIG. 19 is a view showing the process of changing the direction of a first camera unit in the camera apparatus of FIG. 17;

FIG. 20 is a perspective view showing a modified embodiment of the camera apparatus of FIG. 17; and

FIG. 21 is a perspective view showing another modified embodiment of the camera apparatus of FIG. 17.

### DETAILED DESCRIPTION OF THE PREFERRED EMBODIMENT

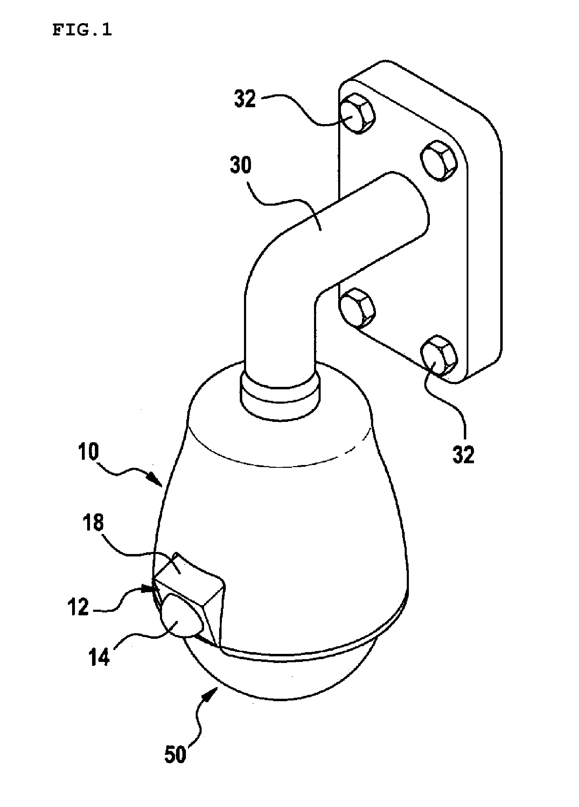

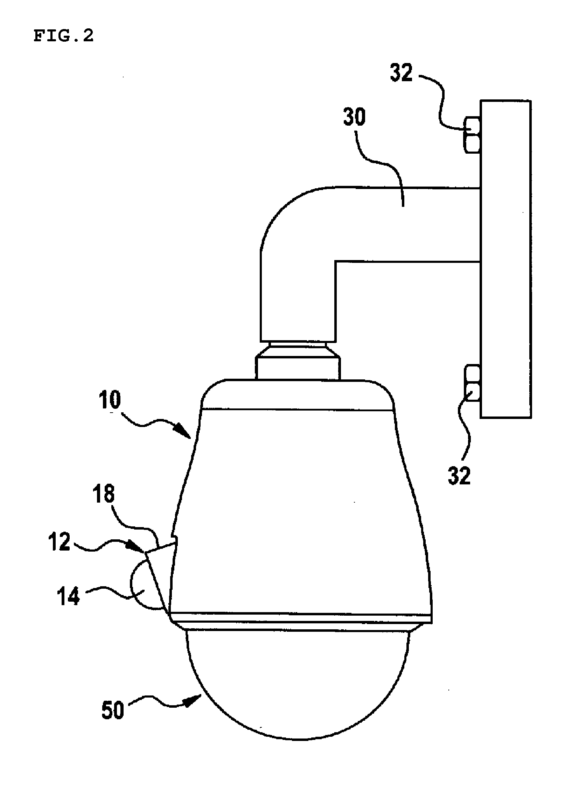

Referring to FIGS. 1 and 2, a camera apparatus according to an embodiment of the present invention includes a main frame 10 having an approximate bell shape, and a dome 50 provided beneath the main frame 10. It is preferable that the housing of the main frame 10 is made of a metal or an opaque synthetic resin material, and the dome 50 is made of a semitransparent synthetic resin material. A first camera unit 12 is installed at a lower portion of the housing of the main frame 10 with the intervention of a supporting protrusion 18. A second camera unit (not shown in FIG. 1) is installed inside the dome 50. A bracket 30 for attaching the camera apparatus on the wall is provided on the top of the main frame 10.

The supporting protrusion 18 is made of a synthetic resin material, spatially supports the first camera unit 12, and determines the direction of the first camera unit 12. In a preferred embodiment, the supporting protrusion 18 is installed at a lower portion of the outer surface of the main frame 10, and the condenser lens 14 of the first camera unit 12 is installed to be exposed outside of the supporting protrusion 18. Particularly, the front surface of the supporting protrusion 18 is inclined downward so as to direct the optical axis of the condenser lens 14 of the first camera unit 12 toward the lower outside of the camera apparatus. Accordingly, the first camera unit 12 may photograph images of neighboring areas including an area directly below the camera apparatus.

The condenser lens 14 of the first camera unit 12 is preferably configured using a wide angle lens and further preferably implemented using a fisheye lens. Accordingly, the first camera unit 12 operates as a wide area monitoring camera. The fisheye lens 14 and an image sensor (not shown in FIGS. 1 and 2) of the first camera unit 12 are fixedly installed inside the supporting protrusion 18.

The second camera unit working as an intensive monitoring camera is a general PTZ camera installed inside a space limited by the dome 50 below the main frame 10. The PTZ camera can be easily implemented by those skilled in the art, and thus the structural configuration of the second camera unit will be omitted.

The bracket 30 is made of a metal material and formed with a vertical unit extended in the vertical direction and having a bottom side connected to the top surface of the main frame 10, a horizontal unit bent backward at the top of the vertical unit and extended in the horizontal direction, and an attachment plate provided at the rear end of the horizontal unit. A plurality of holes is formed on the attachment plate so as to attach the bracket to a supporting pole or a wall surface using bolts 32.

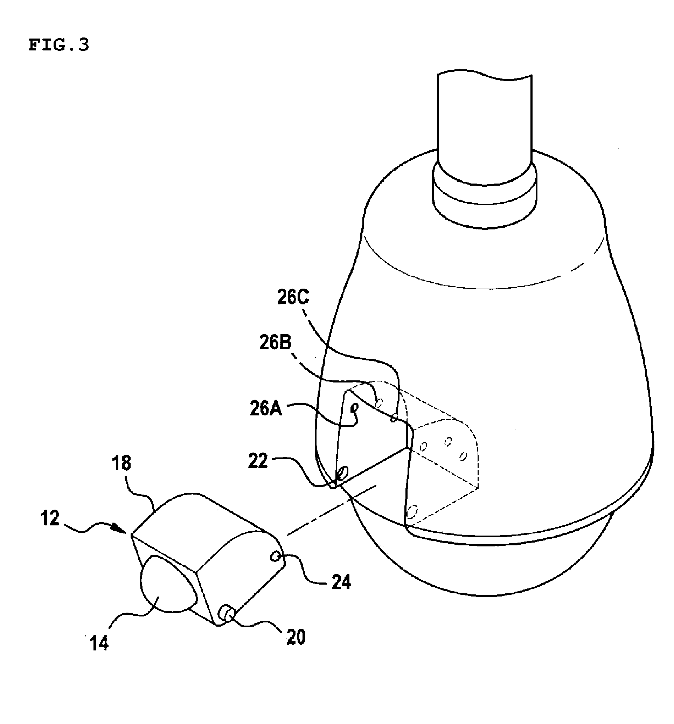

Referring to FIG. 3, the supporting protrusion 18 is formed to be attached or detached to and from outside or inside of the main frame 10. A rotation boss 20 is formed at a lower portion of each side surface of the supporting protrusion 18. In addition, a latch prominence 24 is formed to be projected at the back of the rotation boss 24. Meanwhile, a depression for inserting and installing the supporting protrusion 18 is provided at a lower portion of the outer surface of the main frame 10. An insertion hole 22 corresponding to the rotation boss 24 is formed at a lower portion of each side wall of the depression. In addition, a plurality of latch holes 26A, 26B and 26C is formed at the upper back of the insertion hole 22. For convenience, wiring for connecting the first camera unit 12 to the printed circuit board of the camera apparatus is not shown in FIG. 3.

The supporting protrusion 18 can be inserted into the depression of the main frame 10 from the inside or the front of the main frame 10. At this point, the rotation boss 20 of the supporting protrusion 18 is inserted into the insertion hole 22 of the depression of the main frame 10 so that the supporting protrusion 18 may not be unintentionally detached and may rotate within a limited range from the rotation boss 24. In addition, the latch prominence 24 of the supporting protrusion 18 is engaged to any one of the plurality of latch holes 26A, 26B and 26C so that the supporting protrusion 18 may not randomly rotate centering on the rotation boss 24.

Although the supporting protrusion 18 cannot randomly rotate centering on the rotation boss 20 while the latch prominence 24 is engaged to any one of the plurality of latch holes 26A, 26B and 26C, the latch state between the latch prominence 24 and the latch holes 26A, 26B and 26C can be easily released by external force. When the camera apparatus is being installed or while the camera apparatus is in an installed state, a worker may detach the latch prominence 24 from one of the latch holes 26A, 26B and 26C and then engage the latch prominence 24 with another one of the latch holes. Accordingly, the worker may change the photographing direction of the first camera unit 12 by tilting the supporting protrusion 18.

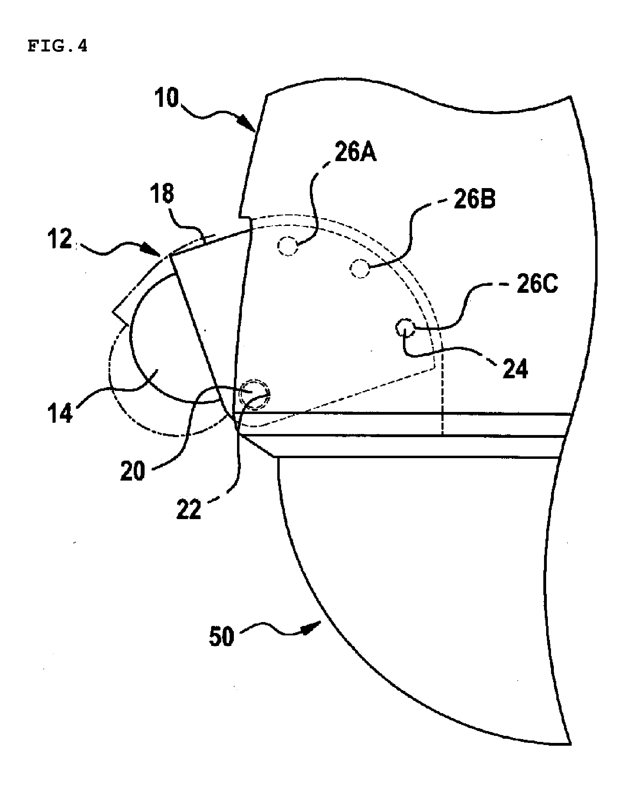

This will be described in further detail with reference to FIG. 4. In FIG. 4, the solid line shows the contour of the first camera unit 12 when the latch prominence 24 is engaged with latch hole 26C, whereas the dotted line shows the contour of the first camera unit 12 when the latch prominence 24 is engaged with latch hole 26B. If the worker releases engagement of the latch prominence 24 with latch hole 26B and engages the latch prominence 24 with latch hole 26C by applying force from the upper portion of the supporting protrusion 18 toward the rear side, the supporting protrusion 18 is tilted upward correspondingly, and the optical axis of the fisheye lens 14 of the first camera unit 12 rotates upward, and the photographing direction of the first camera unit 12 is changed. Accordingly, the photographing area of the first camera unit 12 moves upward from the spatial viewpoint and moves to a distance far from the camera apparatus on the ground.

As described above, the photographing area of the first camera unit 12 can be changed in steps to be appropriate to the area or environment of the installation place by tilting the supporting protrusion 18.

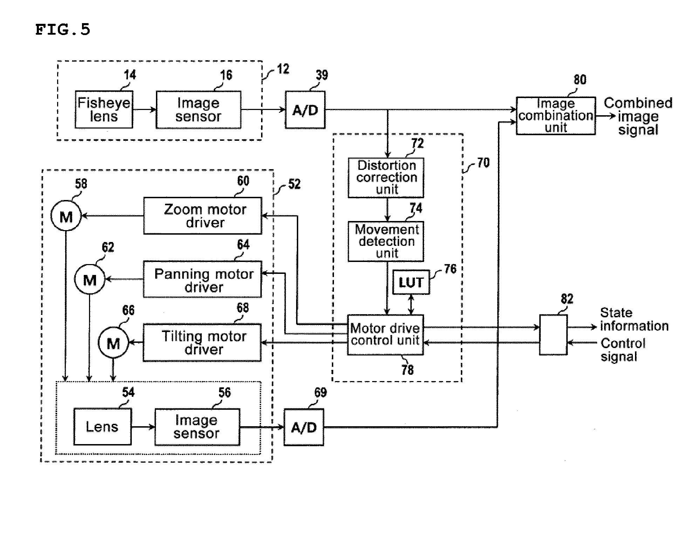

FIG. 5 is a block diagram showing an embodiment of the electrical/optical configuration of the camera apparatus shown in FIG. 1. The camera apparatus includes a first camera unit 12, a second camera unit 14, first and second analog to digital (A/D) converters 39 and 69, a control unit 70, an image combination unit 80, and an interface port 82.

The first camera unit 12 electrically/optically includes a fisheye lens 14 and a first image sensor 16. The fisheye lens 14 has a viewing angle of 150 degrees or more omni-directionally and collects light entering from the space within the viewing angle. In a preferred embodiment, the value of F of the fisheye lens 14 is 1.4, and it is preferable to secure a certain amount of light so as to perform a monitoring function even at night. In an embodiment, the maximum sensing distance of the fisheye lens 14 is 80 meters (m), and its resolution is 3 to 5 mega pixels. The first image sensor 16 converts the light collected by the fisheye lens 14 into an electrical image signal (hereinafter, referred to as a first image signal).

The second camera unit 52 includes a lens 54, a second image sensor 56, a zoom motor 58, a zoom motor driver 60, a panning motor 62, a panning motor driver 64, a tilting motor 66 and a tilting motor driver 68. The lens 54 collects light entering from the front, and the second image sensor 56 converts the light collected by the lens 54 into an electrical image signal (hereinafter, referred to as a second image signal). The zoom motor 58 allows implementation of a zoom-in/zoom-out function by changing the focal distance of the lens 54, and the zoom motor driver 60 drives the zoom motor 58 in response to a control signal received from the control unit 70. The panning motor 62 rotates the second camera unit 52 in the horizontal direction, and the panning motor driver 64 drives the panning motor 62 in response to a control signal received from the control unit 70. The tilting motor 66 rotates the second camera unit 52 in the vertical direction, and the tilting motor driver 68 drives the tilting motor 66 in response to a control signal received from the control unit 70. The zoom motor 58, the panning motor 62, and the tilting motor 66 are preferably implemented using a stepping motor.

The first and second camera units 12 and 52 preferably include a broadband anti-reflection film so as to acquire optimum images. In addition, the first and second camera units 12 and 52 preferably include an auto filter changer for automatically changing an infrared (IR) cut-off filter so as to acquire images even at night, as well as in the day time.

The first A/D converter 39 converts the first image signal into a digital data and outputs a fisheye image data. The first A/D converter 69 converts the second image signal into a digital data and outputs an intensive monitoring image data.

The control unit 70 includes a distortion correction unit 72, a movement detection unit 74, a coordinate-angle lookup table 76 and a motor drive control unit 78.

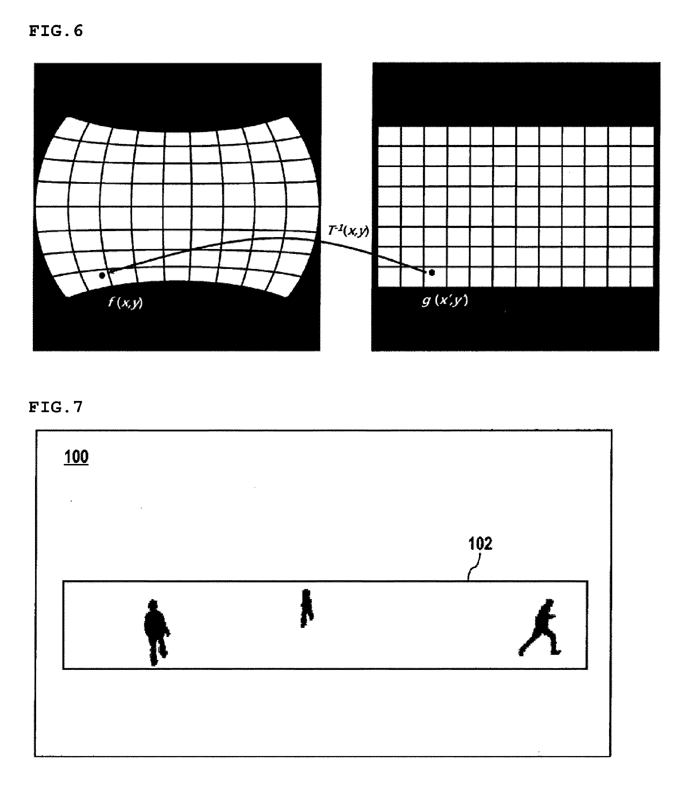

The distortion correction unit 72 corrects distortions in the fisheye image. In an embodiment, the distortion correction unit 72 changes an original pixel value of the fisheye image and matches the original pixel value to a pixel value within the fisheye image after correction using a forward warping algorithm. However, in another embodiment, the distortion correction unit 72 acquires each pixel value within the fisheye image after correction using an inverse warping algorithm. FIG. 6 is a view showing an example of a distortion correction process according to an inverse warping algorithm. First, a point within the fisheye image before correction (x, y) corresponding to a point within the fisheye image after correction (x', y') is determined, and pixel value g(x', y') at point (x', y') is determined based on pixel value f(x, y) at point (x, y). In this case, color errors can be reduced by additionally applying the bilinear interpolation algorithm. In another embodiment, the distortion correction unit 72 may not be separately provided. Since correction of distortion is not a core technical spirit of the present invention and the present invention is not limited to a specific distortion correction algorithm, details of the distortion correction algorithm will be omitted.

The movement detection unit 74 detects changes of each pixel value by comparing a distortion corrected fisheye image by the unit of a certain number of frames and determines a group of pixels in which the amount of change of a pixel value is larger than a predetermined reference value as a moving object. In addition, the movement detection unit 74 detects the amount of movement of objects in the fisheye image and extracts an approximate center point of each object.

The coordinate-angle lookup table 76 stores mapping information of a panning angle and a tilting angle corresponding to each pixel contained in the distortion corrected fisheye image. Position values of the distortion corrected fisheye image, which are input values of the coordinate-angle lookup table 76, can be set at regular intervals or at irregular intervals.

When movement of an object continuously occurs, the motor drive control unit 78 determines the amount of pan/tilt/zoom depending on the amount of movement of the object, i.e., the amount of changes of the center point, and the size of the object and controls the second camera unit 52 to trace the object. Here, if there is a plurality of moving objects within the monitoring area, one or more objects to be traced are selected based on predetermined criteria. For example, an object having the largest amount of movement among the plurality of moving objects can be selected as a target to be traced. At this point, it is preferable to continuously detect movement and grasp moving routes of the objects other than the traced targets.

First, the motor drive control unit 78 receives center point data of the moving object to be traced from the movement detection unit 74 and determines panning and tilting angles with respect to the center point of the moving object referring to mapping information of the coordinate-angle lookup table 76. The motor drive control unit 78 rotates the panning motor 62 and the tilting motor 66 by controlling the panning motor driver 64 and the tilting motor driver 68 based on the determined panning and tilting angles. In addition, the motor drive control unit 78 determines a zoom ratio depending on the size of the monitored and traced moving object and drives the zoom motor driver 60. As the zoom motor 58, the panning motor 62 and the tilting motor 66 are driven depending on the position and size of the moving object as described above, the moving object can be traced and monitored.

Meanwhile, the motor drive control unit 78 may change a target to be traced and monitored in response to a control signal received from a remote monitoring apparatus through the interface port 82. In addition, the motor drive control unit 78 may drive the motor drivers 60, 64 and 68 in response to a control signal.

The image combination unit 80 configures a panoramic image for reference from the corrected fisheye image and configures an output image by combining the panoramic image and the intensive monitoring image. Then, the image combination unit 80 transmits the output image to the remote monitoring apparatus through an image signal line, e.g., a coaxial cable.

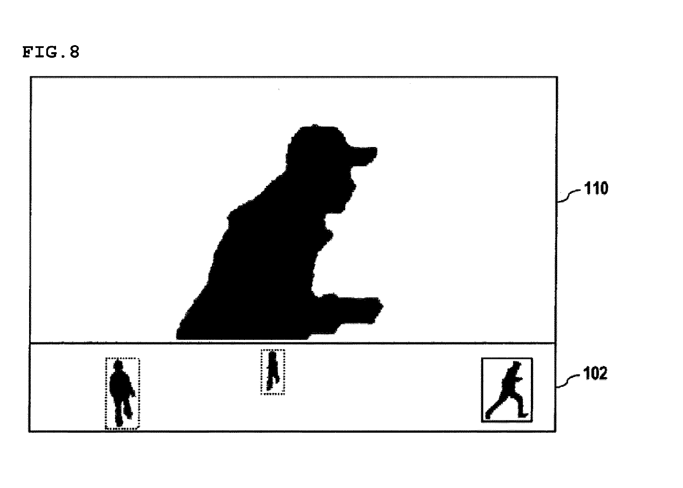

FIG. 7 is a view showing an example of the configuration of a panoramic image. The image combination unit 80 selects only a certain area 102 from the corrected fisheye image 100 and configures a panoramic image or a wide area monitoring image. At this point, the area extracted as the panoramic image 102 from the corrected fisheye image 100 can be previously determined by a program executed in the camera apparatus or can be changed by an operator of the remote monitoring apparatus. In addition, the image combination unit 80 configures an output image by formatting the intensive monitoring image and the panoramic image 102 in response to a control signal received from the control unit 70. FIG. 8 is a view showing an example of an output image. In this figure, the intensive monitoring image 110 is displayed in the upper and middle portions of the output image, and the panoramic image 102 is displayed in the lower portion. In an embodiment, the intensive monitoring image 110 and the panoramic image 102 are arranged to have a height ratio and a width ratio of 3:1.

Here, the panoramic image 102 included in the output image is preferably added with a pointer indicating an area where moving objects exist. Particularly, an object area where tracing and monitoring is currently performed can be discriminated from the other object areas in the shape of the pointer. In the figure, the solid line pointer indicates an object area where tracing and monitoring is currently performed, whereas a dotted line pointer indicates an object area where tracing and monitoring is currently not performed. However, in another embodiment, the object area where tracing and monitoring is currently performed can be discriminated from the object area where tracing and monitoring is currently not performed using different colors.

Referring to FIG. 5 again, the interface port 82 receives a control signal from the remote monitoring apparatus and provides the motor drive control unit 78 with the control signal. In addition, the interface port 82 transmits state information such as detection of a moving object and/or panning and tilting angles to the remote monitoring apparatus. A signal transmission and reception channel between the interface port 82 and the remote monitoring apparatus can be implemented to be appropriate to, for example, RS-232C or RS-485 standards.

Meanwhile, in an embodiment, the control unit 70 and the image combination unit 80 can be implemented using an ARM core (ARM926) and a DSP core (C64+) commercially supplied by Texas Instrument Co. In addition, a digital media processor DaVinci DM644x integrating the ARM core (ARM926) and the DSP core (C64+) can be used. However, in another embodiment, the control unit 70 and the image combination unit 80 can be implemented using a general-purpose microprocessor or microcontroller.

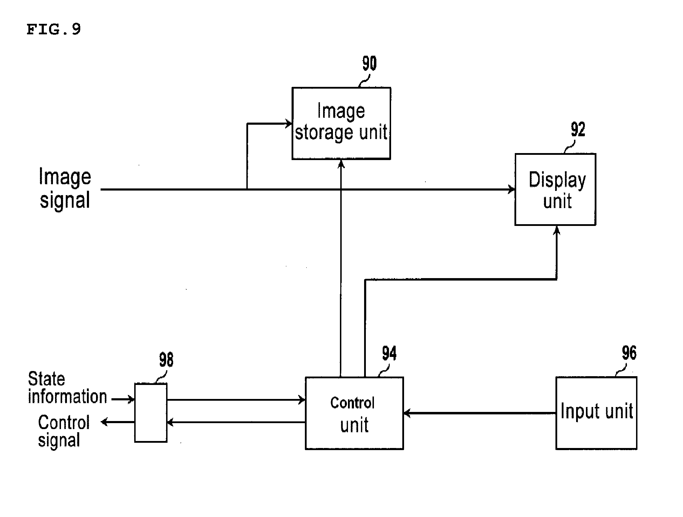

FIG. 9 is a block diagram showing an embodiment of a remote monitoring apparatus appropriate to be used in connection with the camera apparatus shown in FIGS. 1 to 5. The remote monitoring apparatus includes a control unit 90, an input unit 92, an interface port 94, a display unit 96, and an image storage unit 98.

The control unit 90 controls general operation of the remote monitoring apparatus as is previously determined by a program, based on handling commands of a user applied through the input unit 92 and the state information received from the camera apparatus through the interface port 94. In addition, the control unit 90 outputs a control signal for controlling drive of pan/tilt/zoom of the camera apparatus through the interface port 94.

The input unit 92 includes a keyboard, a mouse and/or a joystick and allows a user to select an object to be traced and monitored from an image, select or change a panoramic image area, input a pan/tilt/zoom command, set an image storing function, and set other monitoring functions. The display unit 96 displays the output image received from the camera apparatus, and the image storage unit 98 stores the output image under the control of the control unit 90. The format of the output image displayed on the display unit 96 can be changed depending on a handling command of an operator inputted through the input unit 92. For example, the operator may set to display only the panoramic image 102 or the intensive monitoring image 110.

Accordingly, the operator in the central motoring room may manually change the viewing point of the camera in any direction of up, down, left and right by handling the input unit 92, change an object to be traced and monitored, and arbitrarily operate the monitoring system in a variety of methods other than the method described above.

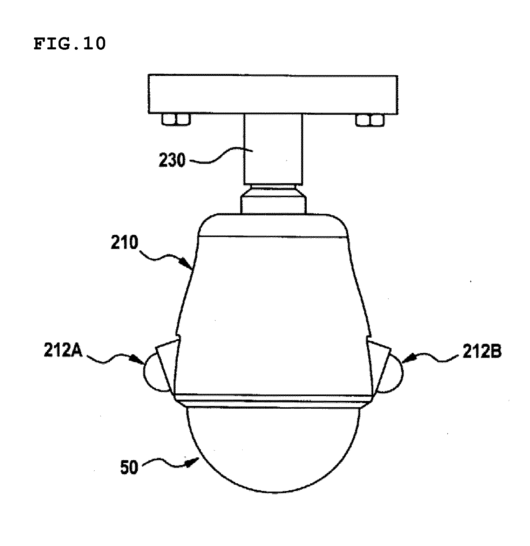

FIG. 10 shows a modified embodiment of the camera apparatus shown in FIGS. 1 and 2. In this embodiment, two first camera units 212A and 212B employing a fisheye lens and monitoring a wide area are provided at lower portions of the outer surface of the main frame 210 to be symmetrical in the horizontal direction with respect to a virtual vertical center axis of the main frame 210. In addition, a bracket for fixing the camera apparatus is formed in a straight form without a curved portion, and thus the camera apparatus can be installed on the ceiling of a room or appropriately on a supporting bar having an installation surface facing downward.

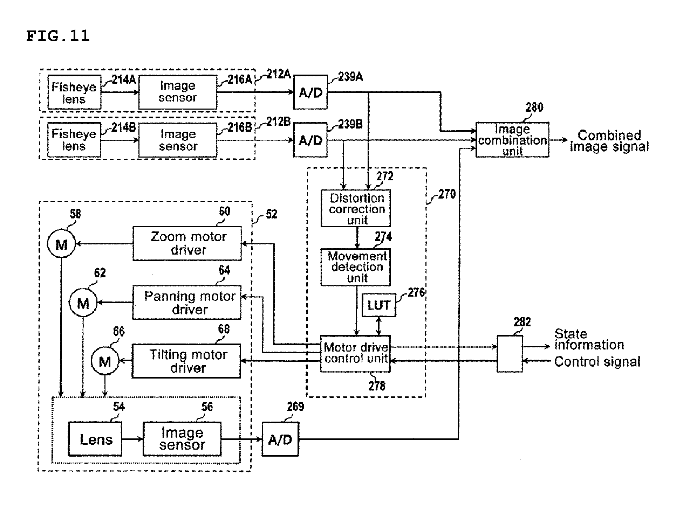

FIG. 11 is a block diagram showing the electrical/optical configuration of the camera apparatus shown in FIG. 10. A/D converters 239A and 239B convert image signals received from the first camera units 212A and 212B into digital data. The A/D converter 269 converts an image signal received from the second camera unit 52 into digital data.

In the control unit 270, a distortion correction unit 272 corrects distortions in the fisheye images received from the A/D converters 239A and 239B. A movement detection unit 274 detects a moving object by comparing the distortion corrected fisheye images by the unit of a certain number of frames. In addition, the movement detection unit 274 detects the amount of movement of objects and extracts an approximate center point of each object. A coordinate-angle look table 276 stores mapping information of a panning angle and a tilting angle corresponding to each pixel contained in the distortion corrected fisheye images.

A motor drive control unit 78 determines the amount of pan/tilt/zoom depending on the amount of movement and size of the object referring to the coordinate-angle look table 276 and enables the second camera unit 52 to trace the object by driving the motor drivers 60, 64 and 68 depending on the determined amount of pan/tilt/zoom.

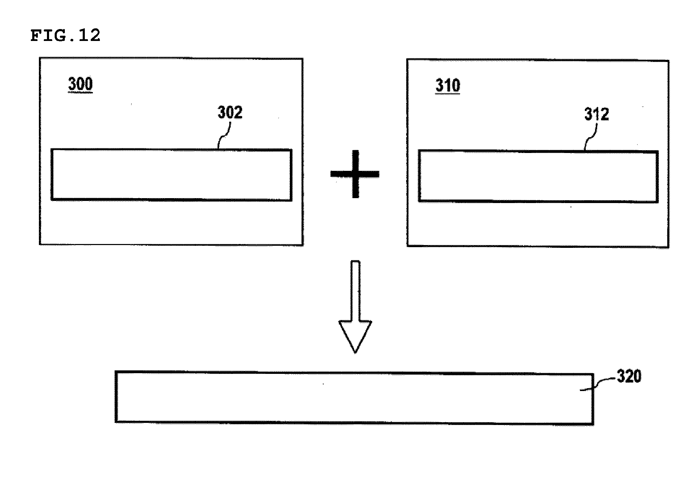

An image combination unit 280 configures a panoramic image from two distortion corrected fisheye images. FIG. 12 is a view showing the process of configuring a panoramic image by the camera apparatus of FIG. 11. The image combination unit 280 selects only certain areas 302 and 312 from the corrected fisheye images 300 and 310 and configures a panoramic image 320 by horizontally connecting the selected image areas. Next, the image combination unit 280 configures an output image by formatting the panoramic image and the intensive monitoring image received from the A/D converter 269. Then, the image combination unit 280 transmits the output image to the remote monitoring apparatus through an image signal line, e.g., a coaxial cable.

Since other features of the camera apparatus shown in FIG. 10 are similar to those of the device shown in FIG. 1, details thereof will be omitted.

According to the camera apparatus shown in FIGS. 10 and 11, the horizontal viewing angle of the overall wide area monitoring camera unit which combines the two first camera units 212A and 212B is enlarged double, and accordingly, the area that can be monitored by the first camera units 212A and 212B is expanded double.

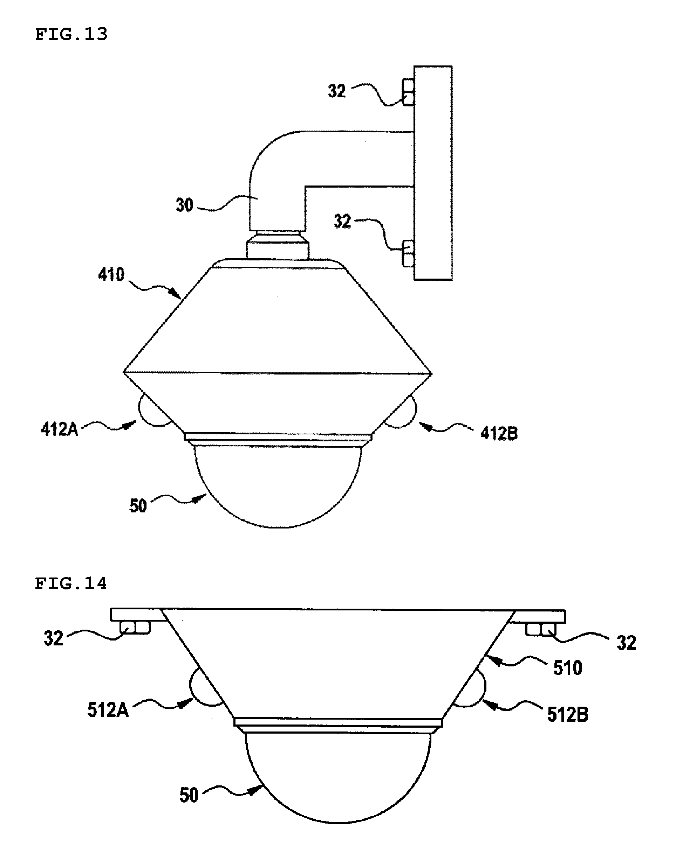

FIG. 13 shows another embodiment of a camera apparatus according to the present invention. According to the embodiment, the lower part of the outer surface of the main frame 410 is inclined so as to direct the virtual normal line thereof toward the lower outside. In this case, the first camera units 412A and 412B can be installed at the lower part of the outer surface of the main frame 410 without need of a supporting body separately. That is, in the embodiment, a fisheye lens of the first camera unit 412A and 412B or a protector thereof may be fixedly installed on the outer surface of the housing. In the embodiment, installation positions of the first camera units 412A and 412B are preferably determined so as to minimize a part hidden by the dome 50 in a photographed valid image.

Although it is shown in FIG. 13 that only two first camera units 412A and 412B are provided, only one first camera unit can be provided in a modified embodiment. Meanwhile, in the embodiment of FIG. 13, it is apparent that a photographing area can be changed by adopting the supporting protrusion shown in FIG. 3 in the first camera units 412A and 412B.

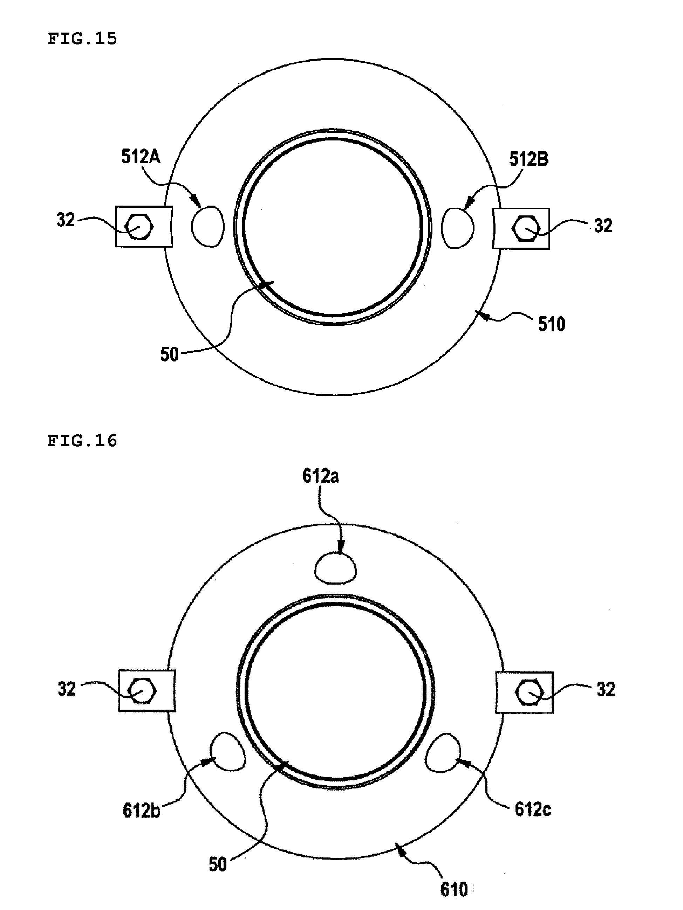

FIGS. 14 and 15 are views showing still another embodiment of a camera apparatus according to the present invention. In the embodiment, the camera apparatus is formed to be directly attached on the ceiling without a bracket separately. While a plurality of fastening units provided on the top of the main frame 510 where the first camera units 512A and 512B and the dome 50 are installed is tightly attached to the ceiling, the camera apparatus can be installed by inserting bolts 32 or screws into screw holes formed at the fastening units and engaging the bolts or screws with the ceiling.

FIG. 16 shows still another embodiment of a camera apparatus according to the present invention. In the camera apparatus according to the embodiment, three first camera units 612A to 612C employing a fisheye lens and monitoring a wide area are provided at lower portions of the outer surface of the main frame 610 to be symmetrical in the horizontal direction with respect to a virtual vertical center axis of the housing of the main frame 610. In the embodiment, installation positions of the first camera units 612A to 612C are preferably determined so as to minimize a part hidden by the dome 50 in a photographed valid image.

According to the camera apparatus shown in FIG. 16, the viewing angle of the first camera units is further expanded, and thus a panoramic image for wide monitoring can be configured further easily, an in addition, further accurate and realistic panoramic images can be configured by excluding most severely distorted edges from the images photographed by the first camera units 612A to 612C.

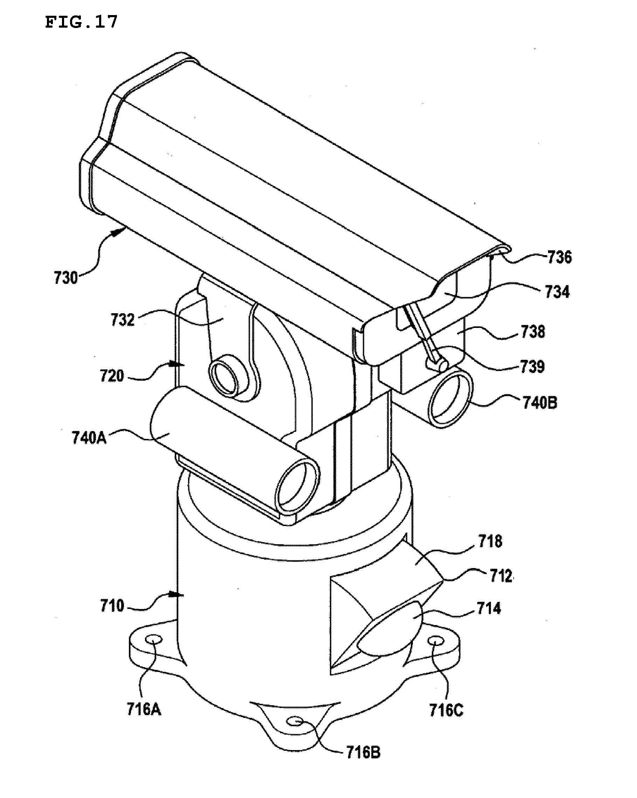

FIG. 17 shows still another embodiment of a camera apparatus according to the present invention. The camera apparatus according to the embodiment includes a main frame 710, a horizontal rotation frame 620 and a second camera unit 30.

The main frame 710 is configured in the form of a pillar having an approximate circular or polygonal cross section, and a first camera unit 712 employing a wide angle lens 714 is installed at a lower portion of the front side of the main frame with the intervention of a supporting protrusion 718.

In a preferred embodiment, the first camera unit 12 is installed to direct the optical axis of the wide angle lens 714 toward the lower outside, and thus the photographing area includes an area directly below the camera apparatus. A plurality of supporting/fastening prominences 716A to 716C formed with through holes is provided at lower portions of the side surface of the main frame 710, and thus the main frame 710 is stably supported on the installation surface and fixed to the installation surface using bolts (not shown).

The horizontal rotation frame 720 is installed so as to pan, i.e., horizontally rotate, on the top of the main frame 710 with respect to the main frame 710. A panning motor is installed in the main frame 710 or the horizontal rotation frame 720 so that the horizontal rotation frame 720 may rotate on the main frame 710. A panning shaft (not shown) is dynamically connected to the panning motor, and the main frame 710 and the horizontal rotation frame 720 are connected with the intervention of the panning shaft.

The second camera unit 730 is installed so as to tilt, i.e., vertically rotate, on the top of the horizontal rotation frame 720. In the embodiment, a tilting motor is installed in the horizontal rotation frame 720, and a tilting shaft (not shown), horizontally crossing the horizontal rotation frame 720 and successively connected, is installed in the tilting motor. A bracket 732 is connected to both ends of the tilting shaft, and the second camera unit 730 is fixedly installed on the top of the bracket 732.

The specific configuration and connection relation of the panning motor and the panning shaft and the specific configuration and connection relation of the tilting motor and the tilting shaft are apparent to those skilled in the art and can be easily implemented by them, and thus details thereof will be omitted.

A transparent window 734 is provided on the front surface of the second camera unit 730 so as to pass light and protect the lens. A cover 736 is attached or formed on the top of the second camera unit 730 in order to protect the second camera unit 730 from dust, snow or rain. A wiper motor storage 738 is installed at a lower portion of the front surface of the second camera unit 730, and a wiper 39 for wiping dust or rain on the transparent window 734 is connected to a wiper motor placed inside the wiper motor storage. Meanwhile, LED lights 740A and 740B are installed at both sides of the horizontal rotation frame 720 so as to radiate light onto a place ahead at night.

A condenser lens 714 used for the first camera unit 712 is preferably configured using a wide angle lens and further preferably implemented using a fisheye lens. The condenser lens 714 and the image sensor of the first camera unit 712 are manufactured inside the supporting protrusion 718 of a synthetic resin material as one body and preferably installed to be projected from the main frame 710. According to the embodiment, the supporting protrusion 718 determines the direction of a combined body of the fisheye lens 714 of the first camera unit 712 and spatially supports the combined body.

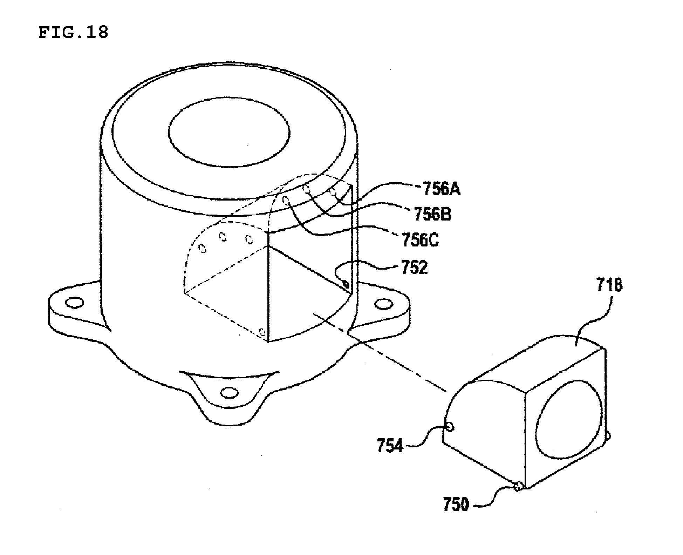

Referring to FIG. 18, a rotation boss 750 is formed at a lower portion of each side surface of the first camera unit 712. In addition, a latch prominence 754 is formed to be projected at the back of the rotation boss 750. Meanwhile, a depression for inserting and installing the first camera unit 712 is provided at a lower portion of the front surface of the main frame 710. An insertion hole 752 corresponding to the rotation boss 750 is formed at a lower portion of each side wall of the depression. In addition, a plurality of latch holes 756A, 756B and 756C is formed at the upper back of the insertion hole 752. For convenience, wiring for connecting the first camera unit 712 to the printed circuit board of the camera apparatus is not shown in FIG. 18.

The first camera unit 712 is inserted into the depression of the main frame 710 from the inside or the front of the main frame 710. At this point, the rotation boss 750 of the first camera unit 712 is inserted into the insertion hole 752 of the depression of the main frame 710 so that the first camera unit 712 may not be unintentionally detached and may rotate within a limited range from the rotation boss 750. In addition, the latch prominence 754 of the first camera unit 12 is engaged to any one of the plurality of latch holes 756A, 756B and 756C so that the first camera unit 712 may not randomly rotate centering on the rotation boss 750.

In a state like this, although the first camera unit 712 cannot randomly rotate centering on the rotation boss 750 while the latch prominence 754 is engaged to any one of the plurality of latch holes 756A, 756B and 756C, the latch state between the latch prominence 54 and the latch holes 756A, 756B and 756C can be easily released by external force. Accordingly, when the camera apparatus is being installed or while the camera apparatus is in an installed state, a worker may detach the latch prominence 754 from one of the latch holes 756A, 756B, and 756C and then engage the latch prominence 24 with another one of the latch holes 756A, 756B, and 756C. Accordingly, the worker may change the photographing direction of the first camera unit 712.

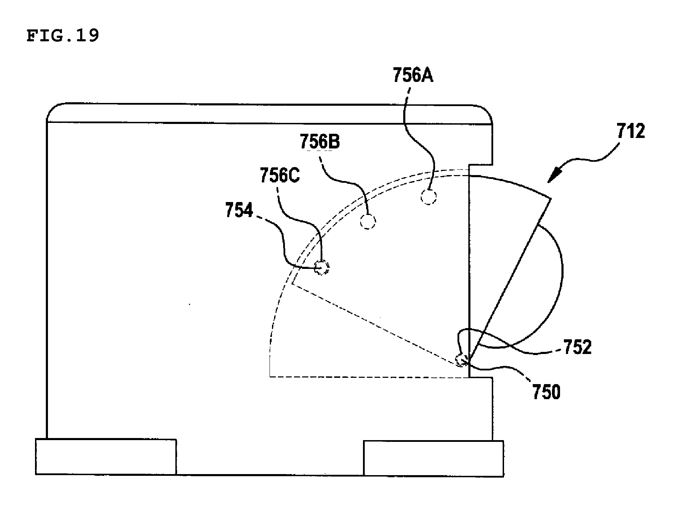

This will be described in further detail with reference to FIG. 19. In FIG. 19, the solid line shows the contour of the first camera unit 712 when the latch prominence 754 is engaged with latch hole 756C, whereas the dotted line shows the contour of the first camera unit 712 when the latch prominence 754 is engaged with latch hole 756B. If the worker releases engagement of the latch prominence 754 with latch hole 756B and engages the latch prominence 754 with latch hole 756C by applying force toward the rear side, the optical axis of the fisheye lens 714 of the first camera unit 712 rotates upward correspondingly, and thus the photographing direction of the first camera unit 712 is changed. Accordingly, the photographing area of the first camera unit 12 moves upward from the spatial viewpoint and moves to a distance far from the camera apparatus on the ground.

As described above, the photographing area of the first camera unit 712 can be changed in steps to be appropriate to the area or environment of the installation place by changing the direction of the first camera unit 712.

The electrical/optical configuration of the camera apparatus shown in FIG. 17 is similar to that of the camera apparatus shown in FIG. 1, and thus details thereof will be omitted.

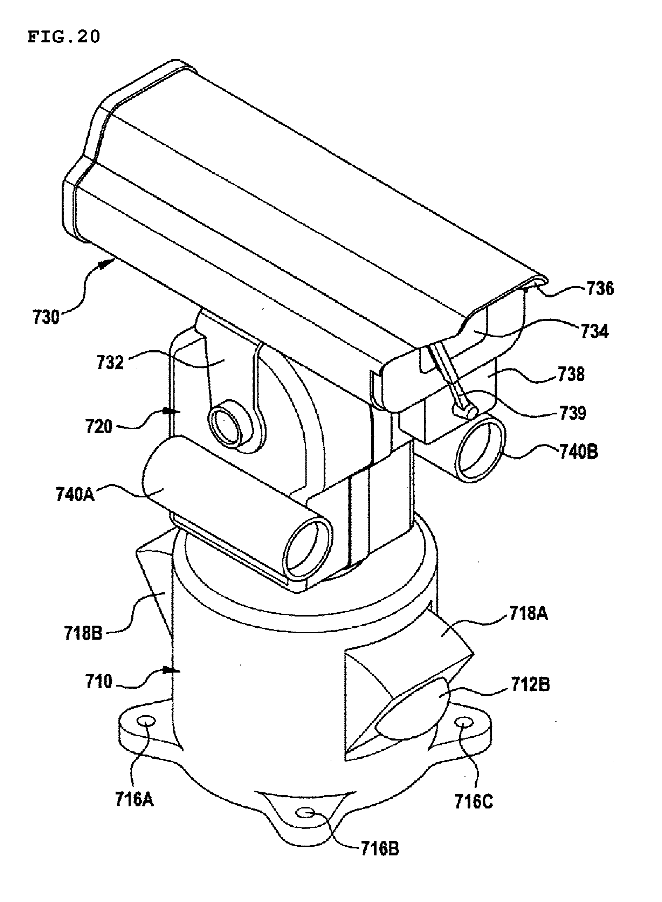

FIG. 20 shows a modified embodiment of the camera apparatus of FIG. 17. In the embodiment, two first camera units employing a fisheye lens and monitoring a wide area are provided on the front and rear sides of the outer surface of the main frame 710 to be symmetrical in the horizontal direction with the intervention of supporting protrusions 718A and 718B. The electrical/optical configuration of the camera apparatus shown in FIG. 20 is similar to that of the camera apparatus shown in FIG. 10, and thus details thereof will be omitted.

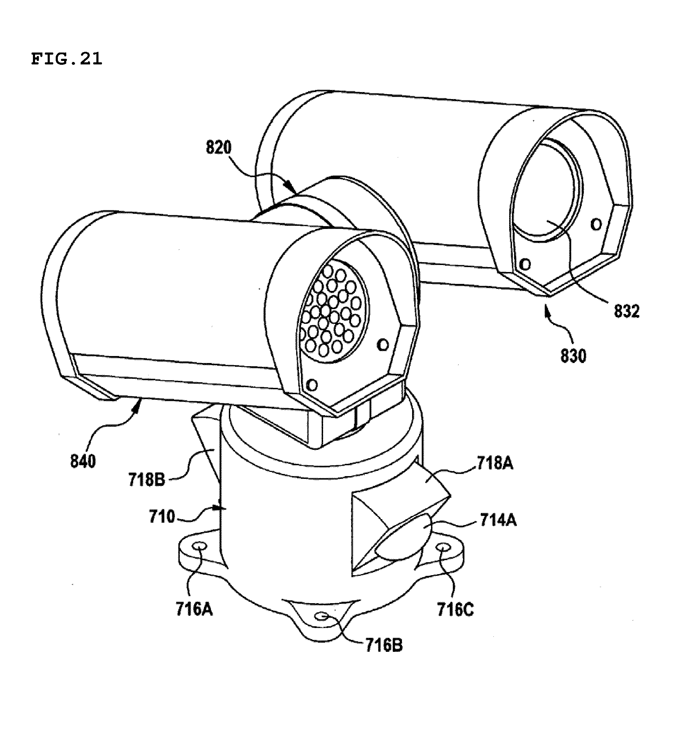

FIG. 21 shows another modified embodiment of the camera apparatus of FIG. 17. The camera apparatus according to the embodiment includes a main frame 710, a horizontal rotation frame 820, a second camera unit 830 and a LED light 840.

The main frame 710 is configured in the form of a pillar having an approximate circular or polygonal cross section, and a first camera unit 712 employing a wide angle lens 714 is installed at the front lower portion of the main frame. In a preferred embodiment, the first camera unit 712 is installed to direct the optical axis of the wide angle lens 714 toward the lower outside, and thus the photographing area includes an area directly below the camera apparatus. A plurality of supporting/fastening prominences 716A to 716C formed with through holes is provided at lower portions of the side surface of the main frame 710, and thus the main frame 710 is stably supported on the installation surface and fixed to the installation surface using bolts (not shown).

The horizontal rotation frame 820 is installed so as to pan, i.e., horizontally rotate, on the top of the main frame 710 with respect to the lower frame. A panning motor is installed in the main frame 710 or the horizontal rotation frame 820 so that the horizontal rotation frame 820 may rotate on the main frame 710. A panning shaft (not shown) is dynamically connected to the panning motor, and the main frame 710 and the horizontal rotation frame 820 are connected with the intervention of the panning shaft.

The second camera unit 830 is installed so as to tilt, i.e., vertically rotate, in the lateral direction of the horizontal rotation frame 820. In the embodiment, a tilting motor is installed in the horizontal rotation frame 820, and a tilting shaft (not shown), horizontally crossing the horizontal rotation frame 820 and successively connected, is installed in the tilting motor. The second camera unit 830 is connected at one end of the tilting shaft, and the LED light 840 is installed at the other end. Accordingly, if the tilting motor and the tilting shaft rotate, the second camera unit 830 and the LED light 840 vertically rotate correspondingly. In addition, since the second camera unit 830 and the LED light 840 are balanced left and right to some extent, damages of the camera apparatus brought by load unbalance can be prevented. Meanwhile, a transparent window 832 is provided on the front surface of the second camera unit 830 so as to pass light and protect the lens.

The specific configuration and connection relation of the panning motor and the panning shaft and the specific configuration and connection relation of the tilting motor and the tilting shaft are apparent to those skilled in the art and can be easily implemented by them, and thus details thereof will be omitted.

While specific embodiments of the present invention have been described above, it will be apparent to those skilled in the art that various changes and modifications may be made without departing from the spirit and scope of the invention as defined in the following claims.

For example, it is described above focusing on an embodiment in which a supporting protrusion 18 supports a fisheye lens and an image sensor in the first camera unit and changes a photographing area and a worker manually rotates the supporting protrusion 18 by applying force with a hand. However, in another embodiment of the present invention, it is possible to rotate and tile such a supporting body using a motor. Particularly, driving a motor can be remotely controlled in a method similar to that of controlling pan/tilt of the second camera unit.

Meanwhile, although a variety of modifications in the form of a camera apparatus are described above with reference to the accompanying drawings, features of the exemplified embodiments can be interchangeably applied within the scope of technical spirits of the attached claims.

On the other hand, although it is described above focusing on an embodiment in which pan/tilt drive of a camera apparatus is automatically performed based on a movement detected by the camera apparatus, in a modified embodiment, the pan/tilt drive can be accomplished based on a control signal received from a remote monitoring apparatus. It is apparent that the remote monitoring apparatus may detect a movement in a panoramic image and drive pan/tilt/zoom.

On the other hand, although it is described above focusing on an embodiment in which a camera apparatus selects a panoramic image part from a wide area monitoring image, selection of the image can be performed in the remote monitoring apparatus.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

### INDUSTRIAL APPLICABILITY

The present invention can be used in all application fields in which omni-directionally monitoring and trace monitoring are needed for a moving object.

## Claims

1. A monitoring camera apparatus comprising:
a main frame having a lens installation surface where a normal line is directed to lower outside;
a first camera unit installed in the main frame and including a wide angle lens disposed on the lens installation surface so as to direct an optical axis thereof to the lower outside and a first image sensor for converting light entering through the wide angle lens into an electrical signal, and photographing images of neighboring areas including an area directly below the camera apparatus; and
a second camera unit having a second sensor and installed so as to horizontally and vertically rotate with respect to the main frame.

2. The apparatus according to claim 1, wherein the main frame includes a supporting protrusion projecting toward outside from an outer surface and having a front surface directed to the lower outside, and the wide angle lens is attached on the front surface of the supporting protrusion.

3. The apparatus according to claim 1 or 2, wherein the first camera unit is provided in plurality to be horizontally symmetrical on the outer surface of the main frame.

4. The apparatus according to claim 2, wherein a depression for insertedly installing the supporting protrusion is provided on the outer surface of the main frame, and the supporting protrusion is detachably installed in the depression.

5. The apparatus according to claim 4, wherein a rotation boss is formed on either a side wall of the depression or a side surface of the supporting protrusion, and an insertion hole is provided on the other surface, and thus a direction of an optical axis of the first camera unit can be changed by tilting the supporting protrusion while the rotation boss is inserted in the insertion hole.

6. The apparatus according to claim 5, wherein a latch prominence is formed on either the side wall of the depression or the side surface of the supporting protrusion, and a plurality of latch holes is provided on the other surface, and thus the latching prominence can be engaged to one of the plurality of latch holes.

7. The apparatus according to claim 4, further comprising an optical axis tilting motor for tilting the supporting protrusion with respect to a center axis of the rotation boss.

8. The apparatus according to claim 2, further comprising:
a movement detection unit for detecting a moving object from a wide angle image acquired by the first camera unit; and
a drive control unit for controlling the second camera unit to photograph the moving object by driving a pan/tilt driving unit of the second camera apparatus,
wherein the second camera unit includes:
a zoom driving unit for adjusting a photographing size of a subject, and
the pan/tilt driving unit for adjusting a photographing direction.

9. The apparatus according to claim 8, further comprising a lookup table for storing mapping information of a panning angle and a tilting angle corresponding to each pixel in the wide angle image, wherein the drive control unit drives the pan/tilt driving unit referring to the lookup table depending on a position of the moving object in the wide angle image.

10. The apparatus according to claim 8, wherein the drive control unit drives the zoom driving unit depending on a size of the moving object.

11. The apparatus according to claim 8, further comprising an image combination unit for configuring an output image by combining the wide angle image and an intensive monitoring image acquired by the second camera unit.

12. The apparatus according to claim 11, further comprising a distortion correction unit for correcting distortions in the wide angle image, wherein the movement detection unit detects the moving object from a distortion corrected wide angle image, and the image combination unit configures the output image by combining the distortion corrected wide angle image and the intensive monitoring image.

13. The apparatus according to claim 1, further comprising a dome at a lower portion of the main frame, wherein the second camera unit is installed inside the dome.

14. The apparatus according to claim 1, further comprising a horizontal rotation frame installed horizontally rotatable with respect to the main frame, wherein the second camera unit is installed vertically rotatable with respect to the horizontal rotation frame.

15. A remote monitoring system comprising a monitoring camera apparatus and a remote monitoring apparatus electrically connected to the monitoring camera apparatus, wherein the monitoring camera apparatus includes:
a main frame having a lens installation surface where a normal line is directed to lower outside;
a first camera unit installed in the main frame, having a wide angle lens disposed on the lens installation surface so as to direct an optical axis to lower outside and photographing images of neighboring areas including an area directly below the camera apparatus;
a second camera unit having a second image sensor and installed so as to rotate horizontally and vertically with respect to the main frame;
a control unit for detecting a moving object from a wide angle image acquired by the first camera unit and controlling the second camera unit to photograph the moving object; and
an image combination unit for configuring an output image by combining the wide angle image and an intensive monitoring image acquired by the second camera unit and transmitting the output image to the remote monitoring apparatus,
and the remote monitoring apparatus displays the output image on a display unit.
